Europäisches Patentamt

European Patent Office

Office européen des brevets

(11) Numéro de publication: **0 379 814**
**A1**

## (12) DEMANDE DE BREVET EUROPEEN

(21) Numéro de dépôt: 89403433.9

(22) Date de dépôt: 12.12.89

(51) Int. Cl.5: **C01F 17/00**

Le titre de l'invention a été modifié (Directives relatives à l'examen pratiqué à l'OEB, A-III, 7.3)

(30) Priorité: **16.12.88 FR 8816604**

(43) Date de publication de la demande:
**01.08.90 Bulletin 90/31**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **David, Claire**
**14bis, rue Friant**
**F-75014 Paris(FR)**
Inventeur: **Picard, Françoise**
**50, avenue de la Dame Blanche**
**F-94120 Fontenay/Sous/Bois(FR)**

(74) Mandataire: **Esson, Jean-Pierre et al**
**RHONE-POULENC CHIMIE Service Brevets**
**Chimie 25, quai Paul Doumer**
**F-92408 Courbevoie Cedex(FR)**

(54) Oxyde de terre rare à granulométrie contrôlée et son procédé d'obtention.

(57) La présente invention a pour objet un oxyde de terre rare à nouvelles caractéristiques morphologiques.

Le procédé de l'invention est caractérisé par le fait qu'il consiste a faire réagir une solution aqueuse d'un sel de terre rare et une base, en présence d'une dispersion colloïdale aqueuse d'un composé de terre rare ; à séparer le précipité obtenu ; puis à le soumettre à un traitement thermique.

Ledit procédé permet d'obtenir un oxyde de terre rare à granulométrie fine et resserrée.

EP 0 379 814 A1

# OXYDE DE TERRE RARE A NOUVELLES CARACTERISTIQUES MORPHOLOGIQUES ET SON PROCEDE D'OBTENTION

La présente invention a pour objet un oxyde de terre rare à nouvelles caractéristiques morphologiques. Plus précisément, elle a trait à un oxyde de terre rare à granulométrie contrôlée. L'invention vise également le procédé d'obtention dudit oxyde de terre rare.

Dans l'exposé qui suit de la présente invention, on entend par l'expression "terres rares", les éléments de terres rares appelés lanthanides ayant des numéros atomiques de 57 à 71 inclus et l'yttrium de numéro atomique égal à 39 et par "terres rares yttriques", les éléments les plus lourds des terres rares conformément au numéro atomique, commençant avec le samarium et finissant avec le lutécium et comprenant l'yttrium.

Dans de nombreuses applications telles que la catalyse, la céramique, la luminescence, etc... on constate à l'heure actuelle, une demande pressante de poudre d'oxyde de terre rare à morphologie contrôlée et, notamment, d'oxyde de terre rare à granulométrie fine et resserrée.

Un des objectifs de la présente invention est de fournir un oxyde de terre rare dont la taille moyenne des particules ou agrégats est inférieure à un micron.

Un autre objectif de l'invention est de fournir un oxyde de terre rare à granulométrie fine et resserrée.

Un dernier objectif est de disposer d'un procédé qui conduit à l'obtention d'un oxyde de terre rare à granulométrie fine et resserrée.

La présente invention a précisément pour objet un oxyde de terre rare à granulométrie fine et resserrée présentant une taille d'agrégats de diamètre moyen inférieur à 1 $\mu$m et un indice de dispersion de la taille de ses agrégats inférieur à 0,7.

On définit le diamètre moyen comme étant un diamètre tel que 50 % en poids des agrégats ont un diamètre supérieur ou inférieur au diamètre moyen.

D'une manière préférentielle, l'oxyde de terre rare selon l'invention présente des agrégats dont le diamètre moyen varie entre 0,2 et 1 $\mu$m et, encore plus préférentiellement, entre 0,2 et 0,4 $\mu$m.

Tous les résultats d'analyses granulométriques donnés dans la présente demande sont déterminés selon une méthode de sédimentation précisée ci-après.

La taille des agrégats s'échelonne entre 0,1 et 4 $\mu$m environ : la fraction granulométrique supérieure à 1 $\mu$m étant inférieure à 10 %.

Le caractère monodisperse de la distribution de la taille des agrégats est mis en évidence par l'indice de dispersion défini par le rapport

$$\frac{d_{84} - d_{16}}{2d_{50}}$$

qui est inférieur à 0,7. Il est compris dans un intervalle allant, de préférence, de 0,3 à 0,5 et, encore plus préférentiellement, de 0,3 à 0,4.

Un autre objet de la présente invention est le procédé d'obtention de l'oxyde de terre rare à nouvelles caractéristiques morphologiques caractérisé par le fait qu'il consiste à faire réagir une solution aqueuse d'un sel de terre rare et une base, en présence d'une dispersion colloïdale aqueuse d'un composé de terre rare ; à séparer le précipité obtenu ; puis à le soumettre à un traitement thermique.

La demanderesse a trouvé un procédé de préparation d'un oxyde de terre rare qui permet de contrôler la taille des particules et leur distribution en faisant appel, à titre de régulateur, de la croissance des particules, à une dispersion colloïdale d'un composé de terre rare que l'on désignera par la suite par le vocable "sol".

La première étape du procédé de l'invention consiste à introduire un sol d'un composé de terre rare, au cours de la précipitation d'un sel basique de terre rare obtenu par réaction d'un sel de terre rare et d'une base.

Pour la clarté de l'exposé, on définit d'abord l'étape de précipitation puis la mise en oeuvre du sol.

Le sel de terre rare mis en oeuvre selon le procédé de l'invention peut être tout sel de terre rare soluble dans les conditions de l'invention. On peut également utiliser un mélange de sels d'une terre rare ou un mélange de sels de différentes terres rares.

L'oxyde de terre rare le plus courant étant un sesquioxyde, on fait appel, le plus souvent, à un sel de terre rare trivalente.

Comme exemples de sels de terres rares susceptibles d'être employés, on peut citer les nitrates, les chlorures, et/ou les sulfates sous forme solide ou sous forme de solution aqueuse.

D'une manière préférentielle, on fait appel à un ou des sels de terres rares sous forme nitrate.

Le sel de terre rare est choisi de telle sorte qu'il ne contienne pas d'impuretés qui puissent se retrouver, dans le produit final. Il peut être avantageux de mettre en jeu un sel de terre rare présentant un degré de pureté supérieure à 99 %.

La concentration de la solution de sel de terre rare n'est pas un facteur critique, selon l'invention et elle peut varier dans de larges limites ; une concentration exprimée en cation métallique comprise entre 0,1 et 3 moles par litre est préférée.

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention, elle peut varier dans de larges limites, par exemple, entre 0,1 et 11 N mais il est préférable de faire appel à des solutions dont la concentration varie entre 1 et 5 N.

La quantité de base additionnée est déterminée de telle sorte que l'on précipite la totalité du cation terre rare, sous forme de son sel basique. Il est possible de mettre en jeu un excès de base mais cela ne présente pas d'intérêt.

Généralement, la quantité de base est définie de telle sorte que le pH du milieu réactionnel soit supérieur à environ 7,5 et, de préférence, inférieur ou égal à environ 10.

La réaction de précipitation du sel basique de terre rare est conduite, de préférence, à une température inférieure à 60° C et l'on travaille plus préférentiellement à la température ambiante le plus souvent comprise entre 10° C et 25° C.

D'une manière pratique, on additionne de préférence la base dans la solution de sel de terre rare. L'addition est faite sous agitation. Elle peut avoir lieu graduellement ou en continu.

Le débit d'addition de la base dans ladite dispersion n'est pas critique : lorsqu' il est exprimé en moles d'OH par mole de cérium IV et par heure, il peut varier entre 0,1 et 5 et de préférence 2 et 4.

Conformément au procédé de l'invention, on introduit au cours de l'étape de précipitation, un sol aqueux d'un composé de terre rare.

Il va sans dire que l'élément terre rare intervenant dans le sol aqueux du composé de terre rare et celui du sel de terre rare est le même si l'on souhaite ne pas introduire de pollution au niveau de l'oxyde de terre rare obtenu.

Comme exemples de sols aqueux susceptibles d'être mis en oeuvre dans le procédé de l'invention, on peut faire appel aux sols aqueux d'un composé de terre rare répondant à la formule générale :

TR(A)$_x$(OH)$_{3-x}$    (I)

dans laquelle
- TR symbolise le cation terre rare de préférence yttrique
- A représente l'anion d'un acide monovalent soluble dans l'eau et présentant un pka compris entre 2,5 et 5
- x est un nombre inférieur à 2,5 et supérieur à 1

La concentration du composé de terre rare dans le sol n'est pas critique. Lorsqu' elle est exprimée en TR$_2$O$_3$, elle peut atteindre 1 mole/litre.

Le taux de terre rare sous forme colloïdale est, de préférence, compris entre 85 et 100 %. L'invention n'exclut pas le sol dans lequel il y aurait présence de la terre rare sous forme ionique. On choisit, de préférence, un taux de terre rare supérieur à 95 %.

La taille des colloïdes présents dans le sol peut varier dans une gamme assez large. Généralement, le diamètre hydrodynamique moyen des colloïdes déterminé par diffusion quasi-élastique de la lumière selon la méthode décrite par Michael L. Mc CONNELL dans Analytical Chemistry 53, n° 8, 1007 A (1981) peut varier entre 1 et 200 nm et, de préférence, entre 3 et 10 nm.

Le pH du sol obtenu est généralement voisin de la neutralité et se situe, le plus souvent, entre 6,0 et 7,5.

Les sols mis en oeuvre préférentiellement dans le procédé de l'invention répondent à la formule générale (I) dans laquelle A est l'anion acétate et x est compris entre 1,1 et 2,2, et, de préférence, entre 1,2 et 1,8. Les terres rares préférées sont l'yttrium et l'holmium.

Le procédé d'obtention des sols tels que précédemment définis consiste à faire réagir un oxyde de terre rare avec une quantité contrôlée d'un acide monovalent, soluble dans l'eau et présentant un pk$_a$ compris entre 2,5 et 5,0, puis à chauffer le milieu réactionnel obtenu.

Intervient donc dans la première étape du procédé, un oxyde de terre rare qui est généralement sous forme sesquioxyde. Il peut être souhaitable de soumettre l'oxyde de terre rare à une calcination à une température comprise entre 850° C et 1050° C et, de préférence, aux environs de 950° C pendant une durée variant, de préférence entre 2 et 4 heures.

En ce qui concerne l'acide, son choix est relié au fait qu'il doit être soluble dans l'eau, être monovalent et présenter un pk$_a$ choisi entre 2,5 et 5,0. On fait appel, de préférence, à un acide exempt d'impuretés. Sa concentration initiale n'est pas critique et il peut être utilisé dilué, par exemple, 1 N ou concentré jusqu 'à 17 N, de préférence entre 1 et 4 N.

La quantité d'acide utilisée doit être en défaut par rapport à la stoechimétrie ce qui signifie que le rapport molaire entre l'acide mis en oeuvre et l'oxyde de terre rare exprimé en cation métallique est inférieur à 2,5 et supérieur à 1 et, de préférence choisi entre 1,1 et 2,2 et, encore plus préférentiellement, compris entre 1,2 et 1,8.

D'une manière pratique, on additionne l'oxyde de terre rare dans la solution de l'acide dont la concentration est ajustée de telle sorte qu'elle réponde à ce qui est indiqué précédemment.

Selon un autre mode de réalisation, on met l'oxyde de terre rare en suspension dans l'eau et l'on ajoute ensuite l'acide en quantité adéquate.

Cette opération est effectuée dans les deux cas sous agitation et à température ambiante qui se situe le plus souvent entre 15° C et 25 °C.

La deuxième étape du procédé d'obtention dudit sol consiste à soumettre le milieu réactionnel à un traitement thermique à une température qui se situe entre 50 °C et la température de reflux du milieu réactionnel. D'une manière préférentielle, le traitement thermique est effectué entre 70 °C et 100 °C.

La durée dudit traitement est très variable et sera d'autant plus courte que la température est élevée.

Une fois la température réactionnelle atteinte, on la maintient pendant 1 à 4 heures et, de préférence, pendant 3 à 4 heures.

On observe la formation d'un sol d'un composé de terre rare et l'on note la présence éventuelle d'un culot constitué essentiellement de l'oxyde de terre rare non réagi lorsque l'oxyde de terre rare a été traité à une température inférieure à 70°C.

Il est souhaitable de séparer ledit culot selon les techniques de séparation solide-liquide : filtration, décantation ou centrifugation.

La séparation est effectuée, de préférence, par centrifugation et l'on récupère ainsi un sol d'un composé de terre rare en milieu aqueux répondant à la formule générale (1) qui est mis en oeuvre selon l'invention au cours de la précipitation d'un sel basique de terre rare préparé tel que mentionné précédemment par réaction d'un sel de terre rare et d'une base.

Une variante préférée du procédé de l'invention consiste à fractionner l'introduction de la base. Plus précisément, on met en oeuvre la base en quantité telle que l'on obtienne un pH sensiblement voisin du pH du sol aqueux du composé de terre rare utilisé à titre de régulateur de la taille de l'oxyde obtenu ; on réalise ensuite l'introduction dans le milieu réactionnel du sol aqueux du composé de terre rare et enfin l'on poursuit l'addition de la base jusqu'à obtention du pH de précipitation du sel basique de terre rare.

D'une manière préférentielle, on effectue l'addition de la base dans la solution du sel de terre rare jusqu 'à obtention d'un pH compris entre 6,0 et 7,5, on ajoute le sol aqueux du composé de terre rare puis l'on poursuit l'addition de la base jusqu 'à obtention d'un pH final compris entre 7,5 et 10 et, de préférence entre 7,5 et 8,5.

La quantité de sol aqueux d'un composé de terre rare exprimé en $Tr_2O_3$ par rapport à la quantité du sel de terre rare rapportée en $Tr_2O_3$ peut varier entre 0,1 et 20 % en poids : la borne supérieure n'est pas critique mais il n'y a aucun intérêt à mettre en oeuvre une quantité supérieure. D'une manière préférentielle, on met en oeuvre le sol aqueux de composé de terre rare à raison de 5 à 10 en poids.

A la fin de l'addition totale de la base, on peut éventuellement maintenir encore le milieu réactionnel sous agitation pendant quelque temps afin de parfaire la précipitation : cette durée n'est pas critique et peut varier entre 1 minute et 24 heures, de préférence entre 1 heure et 3 heures.

La deuxième étape du procédé de l'invention consiste à séparer le précipité obtenu selon les techniques classiques de séparation solide-liquide : filtration, décantation, centrifugation ou essorage.

Cette séparation est effectuée généralement à température ambiante.

Le produit obtenu après séparation, peut être soumis directement à l'opération de calcination, ou bien, il peut subir un séchage préalable.

Les conditions de séchage peuvent varier dans de larges limites. C'est ainsi que la température peut être choisie entre 15° C et 100° C, de préférence, entre la température ambiante et 50° C. La durée du séchage n'est pas critique et peut être comprise entre 2 heures et 48 heures et, de préférence, entre 10 et 24 heures. L'opération de séchage peut être faite à l'air ou sous pression réduite, par exemple, entre 1 et 100 mm de mercure (133,322 Pa et 13332,2 Pa).

Une variante préférée de l'invention consiste à soumettre le produit séparé à un traitement de lyophilisation. Il est obtenu par une congélation brusque du produit à une température située, de préférence, entre -10° C et -30° C suivie par une sublimation sous pression réduite : ladite pression n'étant pas critique et choisie de préférence entre 0,001 et 0,5 atmosphère.

Il est plus intéressant d'effectuer une lyophilisation qu'une opération de séchage, car le produit obtenu après calcination, n'a pas tendance à motter comme cela se produit lorsque le traitement de lyophilisation n'a pas lieu. Dans pareil càs, il est souhaitable d'effectuer un démottage du produit, soit manuellement, soit par délitage des agglomérats aux ultra-sons générés par un appareil quelconque à ultra-sons.

Selon la dernière étape du procédé, on soumet le produit éventuellement séché, à une calcination à une température choisie entre 500° C et 1000° C, mais de préférence, entre 600 et 800° C. Elle dure environ de 30 minutes à 24 heures et, de préférence de 2 à 8 heures.

Il est connu que l'opération de calcination provoque toujours un frittage des particules qui deviennent alors plus grosses.

Comme mentionné précédemment, la mise en oeuvre d'un sol de composé de terre rare, au cours de la précipitation du sel basique de terre rare permet d'obtenir, même après calcination, une taille fine de particules ou agrégats dont le diamètre moyen est inférieur à 1 μm et, de préférence, entre 0,2 et 0,4 μm.

De plus, la répartition de la taille des agrégats est monomodale et, particulièrement resserrée

Il est donc remarquable d'obtenir un oxyde de terre rare aussi fin directement, sans faire appel à une opération de broyage.

Le procédé de l'invention est particulièrement bien adapté pour la fabrication d'un oxyde d'yttrium submicronique.

L'exemple qui suit illustre l'invention sans toutefois la limiter.

Dans l'exemple suivant, les pourcentages donnés sont exprimés en poids.

Avant de détailler l'exemple, on précisera que l'analyse granulométrique est effectuée à l'aide de l'instrument SEDIGRAPH 5000D.

Cet appareil mesure le taux de sédimentation des particules en suspension et présente automatiquement ces résultats en une distribution en pourcentages cumulatifs en fonction des diamètres équivalents sphériques (basée sur la loi de Stokes).

L'appareil détermine, par le truchement d'un faisceau de rayons X très fin, la concentration en particules retenues en suspension à différentes hauteurs de sédimentation, comme une fonction du temps. Le logarithme de l'intensité du rayon X est électroniquement généré et enregistré puis présenté linéairement en "pourcentages cumulatifs" (en plus petits que) sur l'axe Y d'un enregistreur XY. Pour limiter le temps requis par l'analyse, la cellule de sédimentation est continuellement en mouvement de sorte que la profondeur de la cellule de sédimentation est inversement proportionnelle au temps. Le mouvement de la cellule est synchronisé avec l' axe des X de l'enregistreur, pour indiquer directement le diamètre équivalent sphérique correspondant au temps écoulé à une profondeur de sédimentation donnée, l'information de la dimension est présentée sur une feuille logarithmique à 3 modules.

Pour chaque poudre de terre rare, on détermine $d_{50}$, $d_{16}$, $d_{84}$, ce qui permet de calculer l'indice de dispersion défini ci-dessus.

### EXEMPLE

a) Préparation d'un sol aqueux d'un composé d'yttrium

Dans un réacteur de 2 litres muni d'un thermomètre, d'un dispositif d'agitation, d'un système d'introduction des réactifs, d'un réfrigérant ascendant et équipé d'un dispositif de chauffage et d'une unité de mesure du pH, on introduit
- 1000 cm³ d'une solution d'acide acétique 2 N.

Ensuite, on commence à chauffer et une fois la température de 70° C atteinte, on met en dispersion sous agitation mécanique, 180 g d'oxyde d'yttrium de pureté 99,99 % commercialisé par la Société Rhône-Poulenc sous l'appellation qualité luminophore.

On maintient la température de 70° C pendant 3 heures 30 minutes.

On observe la formation d'un sol d'un composé d'yttrium et l'on note la présence d'un culot constitué d'oxyde d'yttrium n'ayant pas réagi qui peut être séparé comme décrit ci-après et éventuellement recyclé à l'étape d'attaque.

On soumet le milieu réactionnel à une opération de centrifugation à l'aide d'une centrifugeuse JOUAN à 3 500 tours/ minute, pendant 20 minutes.

On prélève le surnageant.

On élimine les grosses particules entraînées par filtration sur papier millipores dont le diamètre des pores est supérieur à 1 μm.

On détermine un rendement de la réaction d'attaque de 99 %.

On obtient un sol d'un composé d'yttrium répondant à la formule chimique suivante : $Y(OH)_{1.7}$ - $(CH_3COO)_{1.3}$ ayant une concentration exprimée en $Y_2O_3$ égale à 182 g/l et un pH égal à 6,8.

Le pourcentage d'yttrium sous forme colloïdale est déterminé en dosant l'yttrium total dans la solution surnageante obtenue après ultracentrifugation (45 000 tours/mn - 1 heure) par titrage complexométrique à l'aide d'une solution titrée d'EDTA. Le dosage de la solution surnageante en yttrium permet de déterminer un pourcentage d'yttrium sous forme colloïdale de 95 %.

Le diamètre hydrodynamique moyen des colloïdes mesuré par diffusion quasi-élastique de la lumière est de 40 Å.

### b) Préparation de l'oxyde de terre rare

Dans un appareillage tel que décrit dans le paragraphe a) mais dépourvu de dispositif de chauffage, on introduit à température ambiante, 1250 cm³ d'une solution aqueuse de nitrate d'yttrium (à 57 g/l d'$Y_2O_3$) et dont le pH initial est de 1,7.

On ajoute progressivement en 10 minutes, 20 cm³ d'une solution aqueuse d'ammoniaque 2,1 N de façon à atteindre une valeur de pH voisine de 6,3.

On additionne 44,5 cm³ du sol aqueux du composé d'yttrium préparé sous a) soit à raison de 5 % en poids.

On introduit ensuite en 160 minutes, 750 cm³ de ladite solution d'ammoniaque.

On maintient le milieu réactionnel sous agitation pendant 3 heures.

On effectue la filtration sur verre fritté n° 4.

On détermine un rendement de la réaction de précipitation de 100 %.

On sèche le produit obtenu par lyophilisation pendant 24 heures dans un appareil lyophilisateur CHRIST type 1060.

On recueille 125 g d'un précipité jaune.

On met le produit lyophilisé dans une nacelle en alumine et on le calcine dans un four à moufles, 2 heures à 800°C.

On récupère 71 g d'oxyde d'yttrium.

L'oxyde d'yttrium obtenu présente les caractéristiques suivantes
-diamètre moyen des agrégats : 0,3 $\mu$m
-indice de dispersion :

$$\frac{d_{84} - d_{16}}{2d_{50}} = 0,4$$

L'observation par microscopie à balayage fait apparaître une morphologie de plaquettes régulières ayant environ 0,5 $\mu$m de longueur et environ 0,1 $\mu$m de largeur.

**Revendications**

1. Oxyde de terre rare à granulométrie fine et resserrée présentant une taille d'agrégats de diamètre moyen inférieur à 1 $\mu$m et un indice de dispersion de la taille des agrégats inférieur à 0,7.

2. Oxyde de terre rare selon la revendication 1 caractérisé par le fait que le diamètre moyen des agrégats varie entre 0,2 et 1 $\mu$m.

3. Oxyde de terre rare selon la revendication 2 caractérisé par le fait que ledit diamètre est compris entre 0,2 et 0,4 $\mu$m.

4. Oxyde de terre rare selon l'une des revendications 1 à 3 caractérisé par le fait que la taille des agrégats s'échelonnant entre 0,1 et 4 $\mu$m, la fraction granulométrique supérieure à 1 $\mu$m étant inférieure à 10 %.

5. Oxyde de terre rare selon l'une des revendications 1 à 4 caractérisé par le fait que l'indice de dispersion de la taille des agrégats est compris entre 0,3 et 0,5.

6. Oxyde de terre rare selon la revendication 5 caractérisé par le fait que ledit indice est compris entre 0,3 et 0,4.

7. Oxyde de terre rare selon l'une des revendications 1 à 6 caractérisé par le fait que la terre rare est l'yttrium.

8. Procédé de préparation d'un oxyde de terre rare tel que décrit dans l'une des revendications 1 à 7 caractérisé par le fait qu'il consiste à faire réagir une solution aqueuse d'un sel de terre rare et une base, en présence d'une dispersion colloïdale aqueuse d'un composé de terre rare ; à séparer le précipité obtenu ; puis à le soumettre à un traitement thermique.

9. Procédé selon la revendication 8 caractérisé par le fait que le sel de terre rare est un sel de terre rare, un mélange de sels d'une terre rare ou un mélange de sels de différentes terres rares.

10. Procédé selon l'une des revendications 8 et 9 caractérisé par le fait que le sel de terre rare est un sel de terre rare trivalente.

11. Procédé selon l'une des revendications 8 à 10 caractérisé par le fait que le sel de terre rare est un nitrate, un chlorure et/ou un sulfate de terre rare.

12. Procédé selon l'une des revendications 8 à 11 caractérisé par le fait que la concentration de la solution de sel de terre rare exprimée en cation métallique est comprise entre 0,1 et 3 moles par litre.

13. Procédé selon l'une des revendications 8 à 12 caractérisé par le fait que la base est une solution aqueuse d'ammoniaque..

14. Procédé selon l'une des revendications 8 à 13 caractérisé par le fait que la dispersion colloïdale aqueuse d'un composé de terre rare répond à la formule chimique suivante (I) :
**TR(A)$_x$(OH)$_{3-x}$    (I)**
- TR symbolise le cation terre rare ;
- A représente l'anion d'un acide monovalent soluble dans l'eau et présentant un pk$_a$ compris entre 2,5 et 5 ;
- x est un nombre inférieur à 2,5 et supérieur à 1.

15. Procédé selon la revendication 14 caractérisé par le fait que TR représente une terre rare yttrique.

16. Procédé selon la revendication 15 caractérisé par le fait que TR représente l'yttrium ou l'holmium.

17. Procédé selon l'une des revendications 14 à 16 caractérisé par le fait que A représente l'anion acétate.

18. Procédé selon l'une des revendications 14 à 17 caractérisé par le fait que x est compris entre 1,1 et 2,2.

19. Procédé selon la revendication 18 caractérisé par le fait que x est compris entre 1,2 et 1,8.

20. Procédé selon la revendication 14 caractérisé par le fait que la concentration du composé de terre rare dans ladite dispersion colloïdale peut atteindre 1 mole/litre.

21. Procédé selon la revendication 14 caractérisé par le fait que le taux de terre rare sous forme colloïdale dans ladite dispersion est compris entre 85 et 100 %.

22. Procédé selon la revendication 14 caractérisé par le fait que les colloïdes présentent un diamètre hydrodynamique moyen variant entre 3 et 10 nm.

23. Procédé selon la revendication 14 caractérisé par le fait que le pH de ladite dispersion est compris entre 6,0 et 7,5.

24. Procédé selon l'une des revendications 8 à 23 caractérisé par le fait que l'on additionne la base dans la solution aqueuse de sel de terre rare.

25. Procédé selon l'une des revendications 8 à 24 caractérisé par le fait la quantité totale de base mise en oeuvre est suffisante pour obtenir la précipitation du sel basique de terre rare.

26. Procédé selon la revendication 25 caractérisé par le fait que l'on met en oeuvre la base en une quantité telle que l'on obtienne un pH sensiblement voisin du pH de la dispersion colloïdale du composé de terre rare, que l'on ajoute la dispersion colloïdale du composé de terre rare et que l'on poursuit l'addition de la base jusqu'à obtention d'un pH final supérieur à environ 7,5 et inférieur ou égal à environ 10.

27. Procédé selon l'une des revendications 8 à 26 caractérisé par le fait que la quantité de sol aqueux d'un composé de terre rare exprimé en $Tr_2O_3$ par rapport à la quantité du sel de terre rare rapportée en $TR_2O_3$ varie entre 0,1 et 20 % en poids.

28. Procédé selon la revendication 27 caractérisé par le fait que ladite quantité est comprise entre 5 et 10 % en poids.

29. Procédé selon l'une des revendications 8 à 28 caractérisé par le fait que la réaction de précipitation est effectuée à température ambiante.

30. Procédé selon la revendication 8 caractérisé par le fait que l'on effectue un séchage du précipité séparé par un traitement de lyophilisation.

31. Procédé selon la revendication 30 caractérisé par le fait que ledit traitement consiste à effectuer une congélation entre - 10°C et - 30°C, puis une sublimation sous pression réduite comprise entre 0,001 et 0,5 atmosphère.

32. Procédé selon l'une des revendications 8 à 31 caractérisé par le fait que l'on effectue une étape de calcination à une température comprise entre 500°C et 1000°C.

33. Procédé selon la revendication 32 caractérisé par le fait que la température de calcination est comprise entre 600°C et 800°C.

34. Procédé selon l'une des revendications 32 et 33 caractérisé par le fait que la durée de calcination varie entre 2 heures et 8 heures.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 253 552 (CORNING GLASS WORKS)<br>* Page 4, lignes 17-36 *<br>--- | 1-3 | C 01 F 17/00 |
| A | EP-A-0 207 857 (RHONE-POULENC)<br>* Revendications 18-34 *<br>--- | 8-14 | |
| A | EP-A-0 208 581 (RHONE-POULENC)<br>--- | | |
| A | EP-A-0 275 733 (RHONE-POULENC)<br>--- | | |
| A | CHEMICAL ABSTRACTS, vol. 102, no. 2, janvier 1985, page 132, résumé no. 8968s, Columbus, Ohio, US; V.V. VOLKOVA et al.: "Optimization of the preparation of holmium yttriate", & USTROISTVA, ELEM. METODY KOMPLEKSN. MIKROMINIATYURIZATSII REA 1983, 77-9<br>--- | | |
| A | PATENT ABSTRACTS OF JAPAN, vol. 12, no. 70 (C-479)[2917], 4 mars 1988; & JP-A-62 209 039 (TAKI CHEM. CO., LTD) 14-09-1987<br>----- | | DOMAINES TECHNIQUES RECHERCHES (Int. Cl.5)<br><br>C 01 F 17/00<br>B 01 J 23/00 |

Le présent rapport a été établi pour toutes les revendications

| Lieu de la recherche | Date d'achèvement de la recherche | Examinateur |
|---|---|---|
| LA HAYE | 10-04-1990 | ZALM W.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P0402)